# EUROPÄISCHE PATENTANMELDUNG

(11) **EP 2 244 032 A2**
(43) Veröffentlichungstag der Anmeldung: **27.10.2010**
(21) Anmeldenummer: 09169409.1
(22) Anmeldetag: 03.09.2009
(51) Int. Cl.: F24J 2/05, F24J 2/50, F24J 2/46, F24J 2/26

(54) **Solarkollektor und Verfahren zum Herstellen eines derartigen Solarkollektors**

(30) Priorität: 24.04.2009 DE 102009018520
(71) Anmelder: IP Bewertungs AG, 20354 Hamburg (DE)
(72) Erfinder: Kruse, Jan, Dr.-Ing., 22089, Hamburg (DE); Rostami, Bardia, Dr., 22299, Hamburg (DE); Uelzen, Thorsten, Dr.-Ing., 21698, Bargstedt (DE)
(74) Vertreter: Zech, Stefan Markus

(57) **Zusammenfassung**

Die Erfindung bezieht sich auf einen Solarkollektor (1) mit einer Abdeckung (200), einer Rückwand (300) und einem Absorber (100), der zwischen der Abdeckung (200) und der Rückwand (300) angeordnet ist und mit der Abdeckung (200) und/oder der Rückwand (300) jeweils einen vorderen und/oder hinteren Hohlraum (14, 15) begrenzt. Dabei ist wenigstens ein Abstandshalteelement (400) vorgesehen, das sich von einer vorderen Oberfläche (102) des Absorbers (100) zur Abdeckung (200) und/oder von einer hinteren Oberfläche (103) des Absorbers (100) zur Rückwand (300) erstreckt und mit dem Absorber (100) und/oder der Abdeckung (200) direkt verbunden oder verbindbar ist. Die Erfindung betrifft ferner ein Verfahren zum Herstellen eines derartigen Solarkollektors (1).

## Beschreibung

Die Erfindung betrifft einen Solarkollektor sowie ein Verfahren zum Herstellen eines derartigen Solarkollektors.

Aus dem Stand der Technik sind Solarkollektoren bekannt, die eine Rückwand, einen umlaufenden Kollektorrahmen, ein Absorberelement und eine Abdeckung umfassen, wobei das Absorberelement zwischen der Rückwand und der Abdeckung angeordnet ist. Ein derartiger Solarkollektor ist beispielsweise in der DE 10 2006 006 718 B4 beschrieben. Bei dem bekannten Solarkollektor ist die Abdeckung als transparente Scheibe ausgebildet und mit dem Kollektorrahmen verklebt, der die Abdeckung mit der Rückwand und dem Absorber verbindet. Dabei ist die Abdeckung von dem Absorber beabstandet angeordnet.

Bei dem bekannten Solarkollektor ist das Absorberelement direkt mit dem Kollektorrahmen verbunden. Durch die Absorption von Wärmestrahlung kann sich das Absorberelement ausdehnen, wodurch bei dem bekannten Solarkollektor die Gefahr besteht, dass sich der Rahmen verformt. Ferner besteht das Risiko, dass sich der Abstand zwischen der Abdeckung und dem Absorberelement durch die Erwärmung zumindest bereichsweise vergrößert, wodurch eine ungünstige Thermokonvektion und somit ein verringerter Wirkungsgrad begünstigt wird.

Der Erfindung liegt die Aufgabe zugrunde, einen Solarkollektor anzugeben, der einen gleichbleibenden Wirkungsgrad aufweist und insbesondere konstruktiv derart ausgeführt ist, dass eine ausreichende Bewegungsfreiheit für den Absorber bereitgestellt ist. Ferner liegt der Erfindung die Aufgabe zugrunde, ein Verfahren zur Herstellung eines derartigen Solarkollektors anzugeben.

Erfindungsgemäß wird diese Aufgabe im Hinblick auf den Solarkollektor durch den Gegenstand des Patentanspruchs 1 und im Hinblick auf das Herstellungsverfahren durch den Gegenstand des Patentanspruchs 13 gelöst.

Die Erfindung beruht auf dem Gedanken, einen Solarkollektor mit einer Abdeckung, einer Rückwand und einem Absorber anzugeben, der zwischen der Abdeckung und der Rückwand angeordnet ist und mit der Abdeckung und/oder der Rückwand jeweils einen vorderen und/oder hinteren Hohlraum begrenzt. Dabei ist wenigstens ein Abstandshalteelement vorgesehen, das sich von einer vorderen Oberfläche des Absorbers zur Abdeckung und/oder von einer hinteren Oberfläche des Absorbers zur Rückwand erstreckt. Das Abstandshalteelement ist ferner mit dem Absorber und/oder der Abdeckung direkt verbunden oder verbindbar.

Durch das Abstandshalteelement wird ein gleichbleibender Abstand zwischen dem Absorber bzw. vorderen oder hinteren Oberfläche des Absorbers und der Abdeckung bzw. der Rückwand bereitgestellt. Eine ungünstige Thermokonvektion durch einen vergrößerten Abstand zwischen dem Absorber und insbesondere der Abdeckung wird somit vermieden. Dabei erstreckt sich das Abstandshalteelement von der vorderen Oberfläche des Absorbers zur Abdeckung. Alternativ oder zusätzlich erstreckt sich das Abstandshalteelement von der hinteren Oberfläche des Absorbers zur Rückwand. Das Abstandshalteelement kann sich also auch von der Rückwand zur Abdeckung erstrecken, wobei das Abstandshalteelement dabei vorzugsweise den Absorber durchgreift. Im Allgemeinen ist das Abstandshalteelement rechtwinklig zur vorderen oder hinteren Oberfläche des Absorbers angeordnet.

Es wird darauf hingewiesen, dass die vordere Oberfläche des Absorbers im Gebrauch vorzugsweise der Sonneneinstrahlung zugewandt und die hintere Oberfläche des Absorbers der Sonneneinstrahlung abgewandt angeordnet ist. Die Abdeckung ist dabei auf der der Sonneneinstrahlung zugewandten Seite des Absorbers und die Rückwand auf der der Sonneneinstrahlung abgewandten Seite des Absorbers positioniert.

Die Abdeckung und/oder die Rückwand können ein Glas, insbesondere ein Wärmedämmglas, umfassen. Dadurch wird eine Art Isolierglasverbund bzw. Isolierglaselement bereitgestellt, das einen zentralen Absorber umfasst. Dabei kommen die im Zusammenhang mit dem Abstandshalteelement genannten Vorteile besonders effektiv zum Tragen. Insbesondere wird durch die Abstandshalteelemente erreicht, dass der Solarkollektor durch Standardprofile herstellbar ist, wodurch die Produktionskosten verringert werden. Ferner kann der Absorber, frei innerhalb des Standardprofils angeordnet sein und besitzt somit ausreichend Bewegungsfreiheit bei einer thermisch bedingten Dimensionsänderung. Insgesamt ermöglichen die Abstandshalteelemente eine einfache und kostengünstige Montage des Solarkollektors, insbesondere des Isolierglaselements mit integriertem Thermosolarkollektor. Die Abstandshalteelemente ermöglichen auch eine Montage und/oder den Gebrauch bzw. die Nutzung des Solarkollektors in Schräglage oder waagrecht auf einem Tisch.

Vorzugsweise ist das Abstandshalteelement stiftartig ausgebildet. Das Abstandshalteelement weist somit einen relativ geringen Querschnitt auf, so dass die Funktion des Absorbers kaum beeinträchtigt wird.

Im Allgemeinen weist das Abstandshalteelement vorzugsweise einen weichmacherfreien Kunststoff auf. Der Kunststoff ist zweckmäßigerweise für in dem Solarkollektor auftretende Temperaturen temperaturbeständig. Dazu kann der Kunststoff Glasfaserbeimengungen aufweisen, die die Steifigkeit des Kollektors ganz allgemein, insbesondere auch für den Fall des Stillstandes (Stagnation), erhöhen. Anstelle eines derartigen, thermoplastischen Kunststoffs können auch duroplastische Kunststoffe oder Keramikmaterialien eingesetzt werden.

Das Abstandshalteelement kann einen Befestigungsbereich aufweisen, der mit dem Absorber direkt verbunden oder verbindbar ist. Es ist also möglich, dass der Absorber mit dem Abstandshalteelement eine Einheit bildet, wobei nicht ausgeschlossen ist, dass der Absorber mit mehreren Abstandshalteelementen verbunden ist.

Der Befestigungsbereich kann ferner eine Stirnfläche, insbesondere axiale Stirnfläche, des Abstandshalteelements umfassen. Zur Verbindung des Absorbers mit dem Abstandshalteelement sind somit keine besonderen konstruktiven Gestaltungselemente oder Maßnahmen am Absorber erforderlich.

Der Befestigungsbereich kann alternativ eine Umfangsteilfläche des Abstandshalteelements umfassen. Es ist auch möglich, dass der Befestigungsbereich eine vollständige Umfangsfläche des Abstandshalteelements umfasst. Durch die Umfangsfläche kann das Abstandshalteelement beispielsweise mit einer Bohrung im Absorber gekoppelt bzw. verbunden werden. Die Umfangsteilfläche bzw. Umfangsfläche kann auch ein Gewinde umfassen, das mit einem Gegengewinde in dem Absorber zusammenwirkt.

Vorzugsweise umfasst das Abstandshalteelement wenigstens ein Klemmmittel oder Spannmittel, das den Befestigungsbereich begrenzt. Das Klemmmittel oder Spannmittel ermöglicht eine einfache und schnelle Verbindung des Abstandshalteelements mit dem Absorber. Beispielsweise kann das Klemmmittel schnappverschlussartig ausgebildet sein. Das Klemmmittel kann sich beispielsweise zur Befestigung mit dem Absorber aufspannen und eine widerhakenähnliche Arretierung bilden. Das Spannmittel kann beispielsweise eine Gewindemutter umfassen, die mit einem Fixierungselement derart zusammenwirkt, dass der Absorber zwischen dem Fixierungselement und der Mutter einspannbar ist.

Bei einer bevorzugten Ausführungsform des erfindungsgemäßen Solarkollektors umfasst der Absorber ein Absorberblech oder ein Absorberrohr, das mit dem Abstandshalteelement direkt verbunden oder verbindbar ist.

Der Befestigungsbereich kann ein schienenartiges, insbesondere C-förmiges Profil bilden, das mit dem Absorberrohr verbunden oder verbindbar, insbesondere klemmverbindbar ist. Die Montage des Solarkollektors wird damit weiter vereinfacht. Insbesondere ist es mit dem C-förmigen Profil des Befestigungsbereichs möglich, das Abstandshalteelement einfach auf das Absorberrohr zu clipsen bzw. zu stecken. Zusätzliche Verbindungen bzw. Verbindungsmaßnahmen sind nicht zwingend erforderlich.

Der Befestigungsbereich kann ferner eine Nut umfassen, die eine Seitenfläche des Absorberblechs umgreift. Vorzugsweise ist ein derartiges Abstandshalteelement plattenartig ausgebildet und weist zum Absorber hin den als Nut ausgebildeten Befestigungsbereich auf. Dabei kann das Abstandshalteelement ein Profilelement bilden, das das Absorberblech rahmenartig bzw. leistenartig umgibt.

Das Abstandshalteelement ist vorzugsweise mit dem Absorber verklebt und/oder verschweißt und/oder schraubverbunden und/oder pressverbunden. Andere Verbindungsarten sind ebenfalls möglich. Im Allgemeinen ist es vorteilhaft, wenn das Abstandshalteelement mit dem Absorber derart verbunden ist, dass der Absorber mit dem oder den mehreren Abstandshalteelementen eine Einheit bildet. Eine derartige Absorbereinheit kann beispielsweise vorgefertigt bereitgestellt werden, so dass die Endmontage des Solarkollektors vereinfacht und beschleunigt wird.

Gemäß einem nebengeordneten Aspekt beruht die Erfindung auf dem Gedanken, ein Verfahren zum Herstellen eines derartigen Solarkollektors anzugeben, wobei wenigstens ein Abstandshalteelement mit einem Absorber verbunden und der Absorber anschließend zwischen einer Rückwand und einer Abdeckung angeordnet wird. Dabei weist der Absorber zur Rückwand und/oder zur Abdeckung einen Abstand auf, der durch die Länge des Abstandshalteelements bestimmt ist.

Die Abstandshalteelemente zwischen dem Absorber und der Rückwand bzw. der hinteren Glasscheibe und der Abdeckung bzw. der vorderen Glasscheibe sind vorzugsweise flächig über dem Absorber verteilt. Es sind also vorzugsweise mehrere Abstandshalteelemente vorgesehen, die sich vom Absorber zur Abdeckung und/oder zur Rückwand erstrecken. Die Verteilung der Abstandshalteelemente ist dabei vorzugsweise derart angepasst, dass temperaturbedingte Verformungen des Absorbers im Wesentlichen gedämpft werden. Beispielsweise können die Abstandshalteelemente derart verteilt sein, dass jeweils einem Abstandshalteelement höchstens 2500 cm², insbesondere höchstens 2025 cm², insbesondere höchstens 1600 cm², insbesondere höchstens 1225 cm², insbesondere höchstens 900 cm², insbesondere höchstens 625 cm², insbesondere höchstens 400 cm², insbesondere höchstens 225 cm², insbesondere höchstens 100 cm², insbesondere höchstens 25 cm², der Oberfläche des Absorbers bzw. Absorberblechs zugeordnet sind.

Vorteilhafterweise sind die Abstandshalteelemente in einem zentralen Bereich des Absorbers bzw. Absorberblechs angeordnet. Beispielsweise können die Abstandshalteelemente nur in dem Bereich des Absorberblechs angeordnet sein, in dem auch das Absorberrohr positioniert ist. Der Randbereich des Absorbers kann frei von Abstandshalteelementen sein. Ein derartiger, freier Randbereich des Absorbers umfasst vorzugsweise wenigstens 5%, insbesondere wenigstens 10%, insbesondere wenigstens 15%, insbesondere wenigstens 20%, der Gesamtfläche des Absorbers bzw. des Absorberblechs. Vorzugsweise erstreckt sich der abstandhalteelementfreie Randbereich des Absorbers bzw. Absorberblechs wenigstens 2 cm, insbesondere wenigstens 5 cm, insbesondere wenigstens 10 cm, insbesondere wenigstens 15 cm, von den Außenkanten des Absorbers bzw. Absorberblechs in Richtung des Zentrums des Absorbers.

Die Abstandshalteelemente können über die Oberfläche des Absorbers gleichmäßig verteilt sein. Es ist allerdings nicht ausgeschlossen, dass die Abstandshalteelemente über die Oberfläche des Absorbers ungleichmäßig verteilt sind. Die Verteilung der Abstandshalteelemente kann derart gewählt sein, dass zu erwartende, thermische Verformungen des Absorbers gezielt gestützt werden. Beispielsweise können mittels einer FEM-Analyse Verformungsbereiche des Absorbers vorab bestimmt werden, so dass gezielt in diesen Bereichen Abstandshalteelemente angeordnet werden. Die Anzahl der Abstandshalteelemente kann auf diese Weise derart gewählt werden, dass ein Gleichgewicht zwischen minimaler Anzahl an Abstandshalteelementen und größtmöglicher Stützung des Absorbers eingestellt ist.

Die Abstandshalteelemente sind vorzugsweise mit dem Absorber bzw. dem Absorberblech verbunden. Es ist möglich, dass der Absorber ein vorgefertigtes Bauteil für den Solarkollektor bildet, wobei die Abstandshalteelemente Bestandteil des vorgefertigten Bauteils bzw. Absorbers sind. Dazu können die Abstandshalteelemente integral oder einteilig mit dem Absorber ausgebildet sein. Vorzugsweise bilden der Absorber und die Abstandshalteelemente eine gemeinsame Baugruppe.

Alternativ können die Abstandshalteelemente als Bestandteile der Abdeckung oder der Rückwand vorgefertigt sein. Die Abdeckung bzw. die vordere Glasscheibe und/oder die Rückwand bzw. die hintere Glasscheibe können also bereits vorgefertigte Abstandshalteelemente umfassen bzw. mit den Abstandshalteelementen einteilig ausgebildet sein. Die Abstandshalteelemente können dabei einen integralen Bestandteil der Abdeckung bzw. der Rückwand bilden.

Die im Zusammenhang mit dem Solarkollektor genannten Vorteile und Wirkungen gelten im Wesentlichen analog für das erfindungsgemäße Herstellungsverfahren.

Bevorzugte Ausführungsformen der Erfindung werden im Folgenden unter Bezugnahme auf die beigefügten, schematischen Zeichnungen näher erläutert. Darin zeigen
- Fig. 1: einen Querschnitt durch eine Ausführungsform eines erfindungsgemä- ßen Solarkollektor mit unterschiedlichen Abstandshalteelementen gemäß bevorzugten Ausführungsbeispielen; und
- Fig. 2: einen Längsschnitt durch einen Solarkollektor nach einem weiteren be- vorzugten Ausführungsbeispiel.

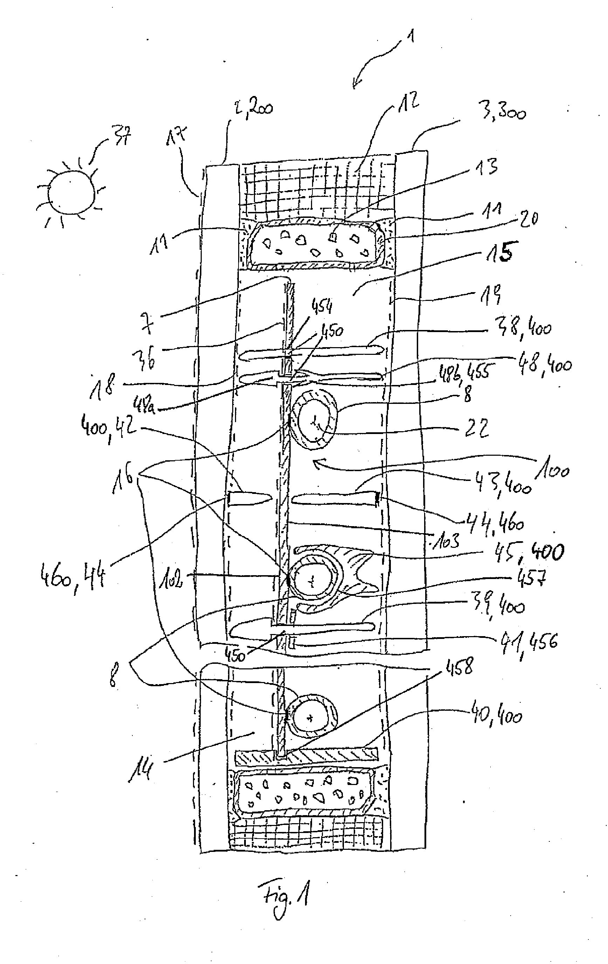

In Fig. 1 ist der Querschnittsaufbau eines erfindungsgemäßen Solarkollektor 1 gemäß einem bevorzugten Ausführungsbeispiel dargestellt. Der Solarkollektor 1 umfasst eine vordere Abdeckung 200 und eine hintere Rückwand 300, die beabstandet zueinander angeordnet sind. Zwischen der Abdeckung 200 und der Rückwand 300 ist ein Absorber 78 angeordnet, der ein Absorberblech 7 umfasst, das mit einem Absorberrohr 8 fest verbunden ist. Zwischen dem Absorberblech 7 und der Abdeckung 2 ist ein vorderer Hohlraum 14 angeordnet. Ein hinterer Hohlraum 15 ist zwischen dem Absorberblech 7 und der Rückwand 300 vorgesehen. Die Hohlräume 14, 15 sind jeweils gegenüber der Umgebung gasdicht abgedichtet. Dazu ist insbesondere vorgesehen, dass zwischen dem Absorber 78 und der Abdeckung 200 bzw. der Rückwand 300 wenigstens ein Abstandshalteelement 400 angeordnet ist.

Im Randbereich des Solarkollektors 1 ist zwischen der Abdeckung 200 und der Rückwand 300 ein Hohlprofil 20 angeordnet, das durch ein primäres Haftmittel 11 mit der Abdeckung 200 und der Rückwand 300 verbunden ist. Außerhalb des Hohlprofils 20 ist ferner ein sekundäres Haftmittel 12 vorgesehen, dass die Abdeckung 200 und die Rückwand 300 direkt verbindet. Das primäre Haftmittel 11 weist vorzugsweise eine auf Butyl basierende Komponente auf. Das sekundäre Haftmittel 12 enthält vorzugsweise Silikon. Im Hohlprofil 20 ist ein Trocknungsmittel 13 angeordnet. Das Trocknungsmittel 13 kann als Molekularsieb ausgeführt sein bzw. Zeolith umfassen.

Das Absorberblech 7 erstreckt sich vorzugsweise über die gesamte Fläche des Solarkollektors 1 innerhalb der durch das Hohlprofil 20 begrenzten Hohlräume 14, 15. Das Absorberblech 7 ist zumindest auf einer Seite mit dem Absorberrohr 8 durch die thermische Verbindung 16 gekoppelt. Es ist auch möglich, dass beidseitig des Absorberblechs 7 ein Absorberrohr 8 angeordnet ist. Vorzugsweise ist das Absorberrohr 8 auf der der Sonneneinstrahlung abgewandten Seite des Absorberblechs 7 angeordnet. Auf der der Sonne 37 zugewandten Seite des Absorberblechs ist ferner eine solarselektive Beschichtung 36 vorgesehen. Die solarselektive Beschichtung 36 erhöht den Wirkungsgrad des Absorberblechs 7.

Die Abdeckung 200 und die Rückwand 300 können jeweils als vordere bzw. hintere Glasscheibe 2, 3 ausgeführt sein. Die hintere Glasscheibe 3 bzw. die Rückwand 300 kann eine Reflexionsschicht 19 umfassen. Die Reflexionsschicht 19 ist auf der Innenseite der hinteren Glasscheibe 3 bzw. der Rückwand 300 angeordnet. Die Reflexionsschicht 19 ist also dem Absorberblech 7 bzw. allgemein dem Absorber 100 zugewandt angeordnet. Die Reflexionsschicht 19 kann eine Low-E-Beschichtung umfassen. In einer besonders vorteilhaften Ausgestaltung ist die Reflexionsschicht 19 derart reflektierend beschichtet, dass insbesondere bzw. überwiegend Infrarotstrahlung reflektiert wird.

Die vordere Glasscheibe 2 ist im Gegensatz zur hinteren Glasscheibe 3 vorzugsweise als Solarglasscheibe ausgeführt. Das schließt allerdings nicht aus, dass die vordere Glasscheibe 2 bedarfsweise auch als Isolierglasscheibe bzw. Wärmedämmglas ausgebildet ist.

Die als Solarglas ausgebildete vordere Glasscheibe 2 umfasst beidseitig eine Antireflexbeschichtung 17, 18, wobei eine erste Antireflexbeschichtung 17 auf der Außenseite der Verbundglasscheibe 1, also auf der der Sonne 37 zugewandten Seite der vorderen Glasscheibe 2 und die zweite Antireflexbeschichtung 18 auf der hinteren Seite der vorderen Glasscheibe 2, also der dem Absorberblech 7 zugewandten Seite der vorderen Glasscheibe 2, angeordnet ist. Die Antireflexbeschichtungen 17, 18 sind vorzugsweise stoffschlüssig mit der vorderen Glasscheibe 2 verbunden.

Um einen möglichst konstanten Wirkungsgrad des Solarkollektors 1 zu erreichen, ist vorteilhaft vorgesehen, den vorderen Hohlraum 14 und den hinteren Hohlraum 15 mit einem Schutzgas, insbesondere Argon, zu befüllen. Auf diese Weise wird die Bildung von Kondensation vermieden. Zusätzlich bewirken die Trocknungsmittel 13 eine Reduzierung des Kondensationsrisikos.

Das Absorberblech 7 und das Absorberrohr 8 weisen vorzugsweise ein Material mit einem hohen Wärmeübergangskoeffizienten, insbesondere Kupfer, auf. Die thermische Verbindung 16 umfasst vorzugsweise ein Metall, insbesondere eine Schweißnaht bzw. eine Lötstelle, wobei die Schweißnaht bzw. die Lötstelle durch ein Laserverfahren bzw. Ultraschallverfahren aufgebracht werden kann. Diese mechanische Verbindung zwischen Kupferrohr bzw. Absorberrohr 8 und Kupferblech bzw. Absorberblech 7 ist thermisch wirksam. Das bedeutet, dass die thermische Verbindung 16 zur Übertragung von Wärmeenergie vom Absorberblech 7 zum Absorberrohr 8 beiträgt.

Die vordere Glasscheibe 2 und die hintere Glasscheibe 3 umfassen jeweils vorzugsweise ein Einscheibensicherheitsglas oder ein teilvorgespanntes Glas oder ein Verbundsicherheitsglas.

In der Figur sind ferner unterschiedliche Ausführungsbeispiele des Abstandshalteelements 400 in Anordnung mit dem Solarkollektor 1 dargestellt. Es ist vorauszuschicken, dass die dargestellten Abstandshalteelemente 400 nicht nur in Kombination miteinander, sondern auch separat in dem erfindungsgemäßen Solarkollektor Anwendung finden und somit jede Kombination eines der dargestellten Abstandshalteelemente 400 mit dem Solarkollektor 1 offenbart und beansprucht wird.

Nachfolgend werden einzelne Ausführungsbeispiele des Abstandshalteelements 400 aus Gründen der Übersichtlichkeit mit jeweils unterschiedlichen Bezugzeichen versehen.

Das erste Abstandshalteelement 400, 38 ist stiftartig ausgebildet und durchgreift den vorderen Hohlraum 14, das Absorberblech 7 und den hinteren Scheibenzwischenraum 15. Das erste Abstandshalteelement 400, 38 erstreckt sich somit von der vorderen Abdeckung 200 bis zur hinteren Rückwand 300. Das erste Abstandshalteelement 400, 38 umfasst einen Befestigungsbereich 450, der sich durch das Absorberblech 7 erstreckt. Der Befestigungsbereich 450 weist eine Umfangsfläche bzw. Umfangsteilfläche 454 des ersten Abstandshalteelements 400, 38 auf, die mit dem Absorberblech 7 verbunden ist. Das bedeutet, dass zumindest ein Teil der Umfangsfläche im Befestigungsabschnitt 450 zur Verbindung des Abstandshalteelements 400, 38 mit dem Absorber 100 bzw. Absorberblech 7 genutzt wird. Die Umfangsfläche bzw. Umfangsteilfläche 454 kann mit dem Absorberblech 7, insbesondere mit einer Innenumfangsfläche einer Absorberblechbohrung, die das erste Abstandshalteelement 400, 38 durchgreift, adhäsionsverbunden, insbesondere verklebt, sein. Eine andere Verbindung, beispielsweise Schraubverbindung, Steckverbindung oder Pressverbindung, ist möglich. Es ist auch denkbar, das erste Abstandshalteelement 400, 38 zusätzlich mechanisch oder durch Kleben, Löten oder Schweißen zu fixieren.

Eine Weiterbildung des ersten Abstandshalteelements 400, 38 ist mit dem zweiten Abstandshalteelement 400, 48 verwirklicht. Das zweite Abstandshalteelement 400, 48 ist im Wesentlichen stiftartig ausgebildet und umfasst ferner Positionierhilfen 48a, 48b. Dabei ist eine vordere Positionierhilfe 48a konusförmig ausgebildet, wobei die Konusbasis im Bereich des Absorberblechs 7 angeordnet ist. Eine hintere Positionierhilfe 48b, die an der der Sonne 37 abgewandten Seite des Absorberblechs 7 angeordnet ist, ist flügelartig ausgebildet, wobei die Flügel der hinteren Positionierhilfe 48b flexibel sind. Die hintere Positionierhilfe 48b bildet somit ein Klemmmittel 455 bzw. einen Schnappverschluss. Auf diese Weise kann das zweite Abstandshalteelement 400, 48 durch eine Bohrung im Absorberblech 7 geführt werden, wobei sich das zweite Abstandshalteelement 400, 48 selbsttätig fixiert, sobald die hintere Positionierhilfe 48b durch das Absorberblech 7 hindurchgeführt ist.

Ein drittes Abstandhalteelement 400, 42 ist stiftartig ausgebildet, wobei sich das dritte Abstandshalteelement 400, 42 von der Rückwand 300 bzw. der hinteren Glasscheibe 3 bis zum Absorberblech 7 erstreckt. Das dritte Abstandshalteelement 400, 42 ist mit der hinteren Glasscheibe 3 durch eine Klebestelle 44 verbunden bzw. mit der hinteren Glasscheibe 3 verklebt. Die Klebestelle 44 ist an einer Stirnfläche 460 des dritten Abstandshalteelements 400, 42 angeordnet. Das dritte Abstandshalteelement 400, 42 bildet ein hinteres Abstandshalteelement 400. Dem hinteren Abstandshalteelement 400 bzw. dem dritten Abstandshalteelement 400, 42 ist ein viertes, vorderes Abstandshalteelement 400, 43 zugeordnet, das korrespondierend zum dritten Abstandshalteelement 400, 42 mit der vorderen Glasscheibe 2 verklebt ist und sich stiftartig zum Absorberblech 7 erstreckt. Dazu ist zwischen der vorderen Glasscheibe 2 und dem vorderen, vierten Abstandshalteelement 400, 43 eine Klebestelle 44 vorgesehen, die im Bereich der Stirnfläche 460 des vierten Abstandshalteelements 400, 43 angeordnet ist. Das Absorberblech 7 ist zwischen dem dritten und dem vierten Abstandshalteelement 400, 42, 43 gehalten. Das bedeutet, dass das dritte und vierte Abstandshalteelement 400, 42, 43 ein Abstandshalterset bzw. eine vorteilhafte Anordnung zweier Abstandshalteelemente 400, nämlich des dritten Abstandshalteelements 400, 42 und des vierten Abstandshalteelements 400, 43, bilden.

Es ist ebenfalls möglich, ein Abstandshalteelement 400 vorzusehen, das mit dem Absorberrohr 8 steckverbindbar bzw. clipverbindbar ist. Ein derartiges Abstandshalteelement 400 zeigt das fünfte Abstandshalteelement 400, 45. Das fünfte Abstandshalteelement 400, 45 weist ein vorderes, C-förmiges Profil 457 auf, das zum Zwecke einer Steckverbindung das Absorberrohr 8 umgreift bzw. auf das Absorberrohr 8 geclipst ist. Das C-förmige Profil 457 bildet somit eine lösbare Steck- bzw. Clipverbindung.

Das fünfte Abstandshalteelement 400, 45 ist auf der der Sonne 37 abgewandten Seite des Absorberblechs 7 angeordnet und umfasst ferner zwei sich in Richtung der hinteren Glasscheibe 3 bzw. der Rückwand 300 erstreckende Anlageabschnitte, die vorzugsweise die hintere Glasscheibe 3 berühren und den Absorber 100 bzw. das Absorberblech 7 und das Absorberrohr 8 gegen die Rückwand 300 abstützen. Eine andere Anzahl von sich in Richtung der hinteren Glasscheibe 3 erstreckenden Spitzen ist möglich.

Ein sechstes Abstandshalteelement 400, 39 weist eine im Wesentlichen stiftartige Form auf, wobei das sechste Abstandshalteelement 400, 39 im vorderen Hohlraum 14 eine der vorderen Positionierhilfe 48a des zweiten Abstandshalteelements 400, 48 entsprechende Form bildet. Im Unterschied zu dem zweiten Abstandshalteelement 400, 48 weist das sechste Abstandshalteelement 400, 39 auf der Rückseite 103 des Absorberblechs 7 bzw. auf der der hinteren Glasscheibe 3 zugewandten Seite des Absorberblechs 7 ein Spannmittel 465, insbesondere eine Sicherungsscheibe 41, auf. Das Spannmittel 465 bzw. die Sicherungsscheibe 41 kann mit dem stiftartigen sechsten Abstandshalteelement 400, 39 verschraubt sein. Die Sicherungsscheibe 41 bildet mit dem vorderen, konusförmigen Abschnitt des sechsten Abstandshalteelements 400, 39 eine Klemmfixierung für das Absorberblech 7.

Ein siebtes Abstandshalteelement 400, 40 ist profilartig ausgebildet und im Bereich des Hohlprofils 20 angeordnet. Insbesondere ist das Abstandshalteelement 400, 40 mit dem Hohlprofil 20 verbunden und weist auf der dem Absorberblech 7 zugewandten Seite eine Nut 458 auf, in die das Absorberblech 7 eingreift. Die Nuttiefe der Nut 458 muss dabei derart bemessen sein, dass der thermischen Ausdehnung der Bauteile, insbesondere des Absorberblechs 7, Rechnung getragen wird, muss also größer als die thermische Ausdehnung des Absorberblechs 7 bemessen sein. Das siebte Abstandshalteelement 400, 40 stützt sich ferner an der Abdeckung 200 und der Rückwand 300 ab und durchgreift die Hohlräume 14, 15. Vorzugsweise ist das siebte Abstandshalteelement 400, 40 leistenartig ausgebildet und weist eine Längserstreckung auf, die sich entlang einer Außenkante des Absorberblechs 7 fortsetzt. Das siebte Abstandshalteelement 400, 40 kann mit dem Absorberblech 7 gekoppelt sein. Dabei kann das siebte Abstandshalteelement 400, 40 mit dem Absorberblech 7 durch Quetschen, Klemmen, Kleben oder mechanischem Verriegeln verbunden sein. Vorzugsweise umfasst das siebte Abstandshalteelement 400, 40 ein Spritzgusselement oder ein Extrusionselement aus einem im Zusammenhang mit dem zweiten Abstandshalteelement 400, 48 genannten Material.

Es wird darauf hingewiesen, dass jedes der genannten Abstandshalteelemente 400 für sich genommen einzeln oder in mehrfacher Anordnung in dem Solarkollektor 1 angeordnet sein kann. Es ist ebenfalls möglich, dass die genannten Abstandshalteelemente 400 in mehrfachen Kombinationen miteinander in dem Solarkollektor 1 zum Einsatz kommen. Beispielsweise können mehrere erste Abstandshalteelemente 400, 38 in einem Verbundglas-Solarkollektor vorgesehen sein. Alternativ oder zusätzlich können mehrere zweite Abstandshalteelemente 400, 48, dritte Abstandshalteelemente 400, 42, vierte Abstandshalteelemente 400, 43, fünfte Abstandshalteelemente 400, 45, sechste Abstandshalteelemente 400, 39 oder siebte Abstandshalteelemente 400, 40 vorgesehen sein. Bevorzugt ist es, mehrere, gleichartige Abstandshalteelemente 400 vorzusehen.

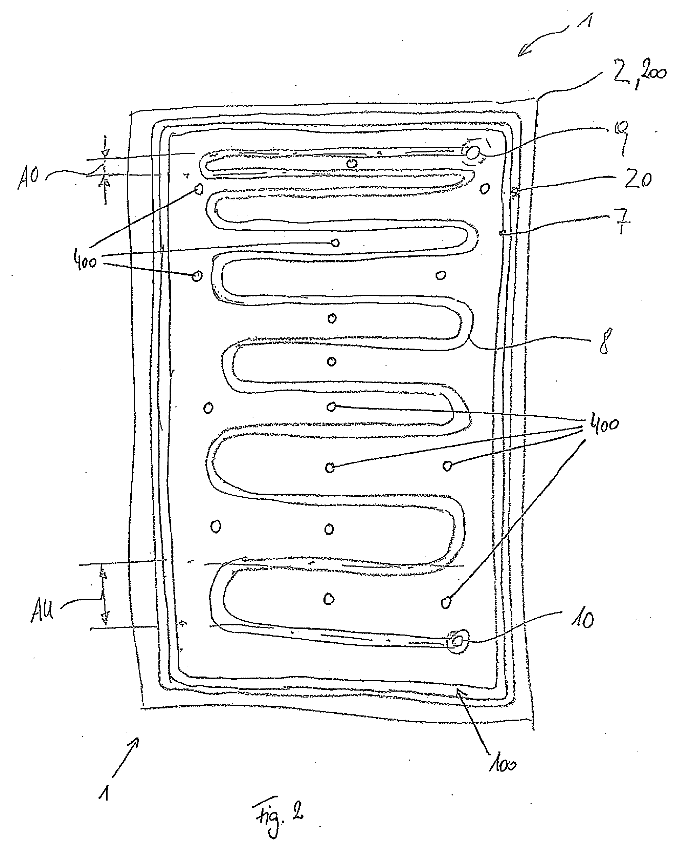

In Fig. 2 ist beispielhaft eine vorteilhafte Anordnung der Abstandshalteelemente 400 auf einem Absorber 100 dargestellt. Der Absorber 100, der vorzugsweise zwischen einer vorderen Glasscheibe 2 und einer hinteren Glasscheibe 3 angeordnet ist, umfasst ein Absorberblech 7 und ein Absorberrohr 8, das mäanderförmig auf dem Absorberblech 7 angeordnet ist. Das Absorberrohr 8 ist mit dem Absorberblech 7 fest verbunden, insbesondere derart, dass zwischen dem Absorberblech 7 und dem Absorberrohr 8 eine thermische Verbindung, d.h. ein Wärmeübergang, ermöglicht ist. Das Absorberblech 7 ist ferner von dem Hohlprofil 20 umgeben, das zwischen der hinteren Glasscheibe 3 und der vorderen Glasscheibe 2 angeordnet ist. Der Absorber 100 bzw. das Absorberblech 7 weist dabei einen Abstand zum Hohlprofil 20 auf.

Das Absorberrohr 8 umfasst eine Zuleitung 9 und eine Ableitung 10, die jeweils aus dem Solarkollektor 1 herausgeführt sind. Insbesondere sind die Zuleitung 9 und die Ableitung 10 durch die, in Fig. 2 nicht dargestellte, hintere Glasscheibe 3 geführt. Dabei bilden die Zuleitung 9 und die Ableitung 10 jeweils ein Winkelstück. Vorzugsweise ist die Zuleitung 9 in einem oberen Bereich des Solarkollektors 1 angeordnet, wogegen die Ableitung 10 in einem unteren Bereich des Solarkollektors angeordnet ist. Dies gilt insbesondere, wenn der Solarkollektor als Verbundglas-Solarkollektor ausgebildet ist, der in im Wesentlichen senkrechter Anordnung in eine Gebäudefassade integriert ist. Es ist auch möglich, dass die Zuleitung 9 und die Ableitung 10 umgekehrt angeordnet sind. Das bedeutet, dass das Absorberrohr 8 bzw. allgemein der Absorber 100 sowohl im Wesentlichen von oben nach unten, als auch im Wesentlichen von unten nach oben mit einem Wärmeträgermedium durchströmbar ist. Das Absorberrohr 8 weist mehrere mäanderförmige Windungen auf, wobei der Abstand der mäanderförmigen Windungen vorzugsweise über die Höhe bzw. Länge des Absorbers 100 variiert. Bevorzugt ist es, wenn im oberen Bereich des Absorbers 100 bzw. allgemein des Solarkollektors 1 ein oberer Abstand AO der mäanderförmigen Windungen vorgesehen ist, der kleiner ist als ein unterer Abstand AU der mäanderförmigen Windungen im unteren Bereich des Solarkollektors 1. Vorzugsweise erhöht sich der Abstand der mäanderförmigen Windungen vom oberen Abstand AO kontinuierlich zum unteren Abstand AU. Die Absorberrohrdichte ist also im oberen Bereich des Solarkollektors 1 vorzugsweise größer als im unteren Bereich des Solarkollektors 1. Damit wird die Effizienz der Energieumwandlung in dem Solarkollektor 1 erhöht, insbesondere bei Integration des Isolierglaselements bzw. Verbundglassolarkollektors in einer Gebäudefassade. Dieser Aspekt der unterschiedlichen Beabstandung der mäanderförmigen Bindungen wird als unabhängige Erfindung, mithin unabhängig vom Vorsehen von Abstandselementen beansprucht.

Die Abstandselemente 400 zwischen dem Absorber 100 und der Rückwand 300 bzw. der hinteren Glasscheibe 3 und der Abdeckung 200 bzw. der vorderen Glasscheibe 2 sind vorzugsweise flächig über dem Absorber 100 verteilt.

### Bezugszeichenliste

- 1: Solarkollektor
- 2: vordere Glasscheibe
- 3: hintere Glasscheibe
- 7: Absorberblech
- 8: Absorberrohr
- 9: Zuleitung
- 10: Ableitung
- 11: primäres Haftmittel
- 12: sekundäres Haftmittel
- 13: Trocknungsmittel
- 14: vorderer Hohlraum
- 15: hinterer Hohlraum
- 16: thermische Verbindung
- 17: erste Glasoberfläche
- 18: zweite Glasoberfläche
- 19: dritte Glasoberfläche
- 20: Hohlprofil
- 35: erstes Abstandshalteelement
- 36: solarselektive Beschichtung
- 37: Sonne
- 38: erstes Abstandshalteelement
- 39: sechstes Abstandshalteelement
- 40: siebtes Abstandshalteelement
- 41: Sicherungsscheibe
- 42: drittes Abstandshalteelement
- 43: viertes Abstandshalteelement
- 44: Klebestelle
- 45: fünftes Abstandshalteelement
- 48: zweites Abstandshalteelement
- 48a: vordere Positionierhilfe
- 48b: hintere Positionierhilfe
- 100: Absorber
- 102: vordere Oberfläche
- 103: hintere Oberfläche
- 200: Abdeckung
- 300: Rückwand
- 400: Abstandshalteelement
- 450: Befestigungsbereich
- 454: Umfangsteilfläche
- 455: Klemmmittel
- 456: Spannmittel
- 457: C-fömiges Profil
- 458: Nut
- 460: Stirnfläche
- AO: oberer Abstand
- AU: unterer Abstand

## Patentansprüche

1. Solarkollektor (1) mit einer Abdeckung (200), einer Rückwand (300) und einem Absorber (100), der zwischen der Abdeckung (200) und der Rückwand (300) angeordnet ist und mit der Abdeckung (200) und/oder der Rückwand (300) jeweils einen vorderen und/oder hinteren Hohlraum (14, 15) begrenzt, wobei wenigstens ein Abstandshalteelement (400) vorgesehen ist, das sich von einer vorderen Oberfläche (102) des Absorbers (100) zur Abdeckung (200) und/oder von einer hinteren Oberfläche (103) des Absorbers (100) zur Rückwand (300) erstreckt und mit dem Absorber (100) und/oder der Abdeckung (200) direkt verbunden oder verbindbar ist.

2. Solarkollektor (1) nach Anspruch 1,
**dadurch gekennzeichnet, dass**
das Abstandshalteelement (400) stiftartig ausgebildet ist.

3. Solarkollektor (1) nach Anspruch 1 oder 2,
**dadurch gekennzeichnet, dass**
das Abstandshalteelement (400) einen Befestigungsbereich (450) aufweist, der mit dem Absorber (100) direkt verbunden oder verbindbar ist.

4. Solarkollektor (1) nach Anspruch 3,
**dadurch gekennzeichnet, dass**
der Befestigungsbereich (450) eine Stirnfläche (460), insbesondere axiale Stirnfläche, des Abstandshalteelements (400) umfasst.

5. Solarkollektor (1) nach Anspruch 3,
**dadurch gekennzeichnet, dass**
der Befestigungsbereich (450) eine Umfangsteilfläche (454) des Abstandshalteelements (400) umfasst.

6. Solarkollektor (1) nach wenigstens einem der Ansprüche 3 bis 5,
**dadurch gekennzeichnet, dass**
das Abstandshalteelement (400) wenigstens ein Klemmmittel (455) oder Spannmittel (456) umfasst, das den Befestigungsbereich (450) begrenzt.

7. Solarkollektor (1) nach wenigstens einem der Ansprüche 1 bis 6,
**dadurch gekennzeichnet, dass**
der Absorber (100) ein Absorberblech (7) oder ein Absorberrohr (8) umfasst, das mit dem Abstandshalteelement (400) direkt verbunden oder verbindbar ist.

8. Solarkollektor (1) nach Anspruch 7,
**dadurch gekennzeichnet, dass**
der Befestigungsbereich (450) ein schienenartiges, insbesondere C-förmiges Profil (457), bildet, das mit dem Absorberrohr (8) verbunden oder verbindbar, insbesondere klemmverbindbar, ist.

9. Solarkollektor (1) nach wenigstens einem der Ansprüche 3 bis 8,
**dadurch gekennzeichnet, dass**
der Befestigungsbereich (450) eine Nut (458) umfasst, die eine Seitenfläche (105) des Absorbers (100), insbesondere Absorberblechs (7), umgreift.

10. Solarkollektor (1) nach wenigstens einem der Ansprüche 1 bis 9,
**dadurch gekennzeichnet, dass**
das Abstandshalteelement (400) mit dem Absorber (100) verklebt und/oder verschweißt und/oder schraubverbunden und/oder pressverbunden ist.

11. Solarkollektor (1) nach wenigstens einem der Ansprüche 1 bis 10,
**dadurch gekennzeichnet, dass**
der Solarkollektor (1) rahmenlos ausgebildet ist.

12. Verfahren zum Herstellen eines Solarkollektors (1) nach Anspruch 1, wobei wenigstens ein Abstandshalteelement (400) mit einem Absorber (100) verbunden und der Absorber (100) anschließend zwischen einer Rückwand (300) und einer Abdeckung angeordnet wird, wobei der Absorber (100) zur Rückwand (300) und/oder zur Abdeckung (200) einen Abstand aufweist, der durch die Länge des Abstandshalteelements (400) bestimmt ist.
